# EUROPEAN PATENT SPECIFICATION

(11) **EP 1 838 772 B1**
(45) Date of publication and mention of the grant of the patent: **20.11.2013**
(21) Application number: 06717982.0
(22) Date of filing: 03.01.2006
(51) Int. Cl.: C08K 5/34, C08K 5/3435

(54) **METHOD FOR TRANSFORMATION OF CONVENTIONAL AND COMMERCIALLY IMPORTANT POLYMERS INTO DURABLE AND RECHARGEABLE ANTIMICROBIAL POLYMERIC MATERIALS**
VERFAHREN ZUR UMWANDLUNG KONVENTIONELLER UND KOMMERZIELL RELEVANTER POLYMERE IN LANGLEBIGE UND WIEDERAUFLADBARE ANTIMIKROBIELLE POLYMERMATERIALIEN
PROCEDE POUR LA TRANSFORMATION DE POLYMERES CLASSIQUES ET D'IMPORTANCE COMMERCIALE EN MATERIAUX POLYMERIQUES ANTIMICROBIENS DURABLES ET RECHARGEABLES

(30) Priority: 03.01.2005 US 640985 P
(43) Date of publication of application: 03.10.2007
(73) Proprietor: Board of Regents, The University of Texas System, Austin, TX 78701 (US)
(72) Inventor: SUN, Yuyu, Austin, TX 78749 (US); CHEN, Zhaobin, Pudong District, Shanghai 201200 (CN)
(74) Representative: Sonn & Partner Patentanwälte
(86) International application number: PCT/US2006/000849
(87) International publication number: WO 2006/074455

(56) References cited:
- WO-A1-98/54175
- WO-A2-01/72715
- WO-A2-2005/058814
- US-A- 5 889 130
- US-A1- 2003 216 581
- US-A1- 2004 265 565
- US-B1- 6 409 941
- NISHIMOTO S I ET AL: "Radiation-induced structural changes in poly(propylene-ran-ethylene) film: Effect of antioxidant 2,2,6,6-tetramethylpiperidine derivatives", INTERNATIONAL JOURNAL OF RADIATION APPLICATIONS AND INSTRUMENTATION. PART C. RADIATION PHYSICS AND CHEMISTRY, PERGAMON, vol. 39, no. 5, 1 May 1992 (1992-05-01), pages 413-419, XP022598730, ISSN: 1359-0197, DOI: 10.1016/1359-0197(92)90053-I [retrieved on 1992-05-01]

## Description

### Technical field of the Invention

The present invention relates in general to the field of antimicrobials, and more particularly, to compositions and methods to make and recharge antimicrobial additives for polymeric materials.

### Background Art

Without limiting the scope of the invention, its background is described in connection with polymeric biocides.

In response to the wide spreading of infectious pathogens (1), antimicrobial polymers, polymers that can effectively inactivate microorganisms upon contact, have attracted considerable interests (2-12). The simplest and most cost-effective method in the preparation of antimicrobial polymeric materials is to directly add antimicrobial additives into polymer structures during processing and has been extensively used in the production of woods, papers, plastics, textiles, coatings, etc. (13-14). Traditionally, the main purpose to add biocides into polymers is to protect the polymeric materials from deterioration and discoloration caused by microbial attacks (15-16). Therefore, some of the antimicrobial additives are actually preservatives, which have low antimicrobial activities and although antimicrobial are very toxic.

Recently, the development of antimicrobial additives that protect both the polymers and the users has become an urgent issue; however, successful examples are still limited (13-16). The major challenge is that to be successful, candidates of antimicrobial additives should meet the following requirements: they should be effective against a broad spectrum of microorganisms at low concentrations; they should have low toxicity to human, animals and the environment; they should be easily and inexpensively synthesized and processed; they should be compatible with the polymer, processing aids and other additives; they should have no negative impact on the properties and appearance of the polymers; they should be stable upon storage; and they should have long-lasting efficacy; etc. (14).

One example of a polymeric biocide is described in United States Patent Application 20030216581, filed by Sun, et al., N-halamine vinyl compounds and their polymeric biocides are described. More particularly, heterocyclic vinylic compounds are described that may be used to form biocidal polymers. The polymers may be used alone or grafted onto textiles, fabrics and polymers. The polymers are readily converted to N-halamine structures on exposure to a halogen source such as commercially available chlorine bleach. The N-halamine derivatives exhibit potent antibacterial properties against microorganisms and these properties are durable and regenerable.

United States Patent 6,762,225, issued to Malik, et al., for light stabilizer composition and teaches a light stabilizer composition obtainable by mixing a polymer with at least one polyalkylpiperidine and at least one free radical generator and melt-blending of that mixture at a temperature above the melting point of the polymer and above the decomposition temperature of the free radical generator and at shear conditions sufficient to blend the components. The light stabilizers of this patent provide a method for enhancing the light stability of polymers, preferably polyolefins.

United States Patent 6,670,412, issued to Erderly, et al., for a method of melt processing amine containing polyethylenes and teaches a processed linear polyethylenes containing an amine additive are shown to exhibit improved processability through the addition of certain surfactants. The amine compounds are generally one or more hindered amine light stabilizers, amine antistats, amine antioxidants or amine based UV inhibitors. Among the melt processing parameters improved are reduced head pressure, reduced torque, reduced motor load, reduced or eliminated melt fracture, or combinations of these parameters.

United States Patent 6,878,761, issued to Gugumus, for synergistic combinations of UV absorbers for pigmented polyolefins and teaches a polyolefin composition which includes an organic pigment, a sterically hindered amine light stabilizer and as UV absorber a mixture of a 2-hydroxyphenyl benzotriazole and a 2-hydroxyphenyl-s-triazine.

WO 2005/058814 discloses a spiro compound, namely 7,7,9,9-tetramethyl-1,3,8-triazaspiro[4.5]decane-2,4-dione as a biocidal siloxane coating material to be coated on, attached to, or incorporated in a material to control and/or eliminate microorganisms. Said document was published on June 30, 2005, i.e. after the priority date of the present application.

Nishimoto et al, "Radiation-induced structural changes in poly(propylene-ran-ethylene)film: Effect of antioxidant 2,2,6,6-tetramethylpiperidine derivatives", International Journal of RadiationApplications and Instrumentation, Part C, Radiation Physics and Chemistry, Pergamon, vol. 39, no. 5, May 1, 1992, pages 413-419 discloses an isotactic random copolymer of propylene and 2.3 wt% ethylene in films with and without bis(2,2,6,6-tetramethyl-4-piperidinyl)sebacate (LS-770) or bis(N-chloro-2,2,6,6-tetramethyl-4-piperidinyl)-sebacate (LS-770-Cl). The copolymer was γ-irridiated up to 20 Mrad in air at room temperature, whereby progressive oxidation proceeded to form hydroperoxide and carbonyl groups, which were depressed by the antioxidizing action of the additives. The apparent antioxidizing activity of LS-770, which is the non-halogenated compound, was higher than of LS-770-Cl, i.e. the halogenated compound.

### Disclosure of the Invention

The present inventors have recognized that certain "traditional" polymer additives (or their derivatives) may be improved to provide antimicrobial functions. It has been found that certain N-halo derivatives of Sterically Hindered Amines (SHAs), which were mainly used as light stabilizers of polymeric materials, can be such candidates. The majority of commercially important SHAs are piperidine derivatives, which are widely available with low cost and low toxicity (14-18). To date, they are one of the most effective photo-stabilizers of polymeric materials. The N-halo derivatives of SHAs could be readily synthesized by a simple halogenation reaction (19-20). Contrary to other halamines, hindered N-halamines prepared from SHAs are very stable and they were reported to be even better radiation stabilizers than their un-halogenated SHA precursors (21).

The SHA-based N-halamines additives of the present invention have been found to be powerful antimicrobial agents against both gram-negative and gram-positive bacteria. The SHA-based N-halamines as novel antimicrobial additives may be used in conjunction with a wide range of polymeric materials.

A method for transformation of conventional and commercially important polymers into durable and rechargeable antimicrobial polymeric materials is described herein. The compositions and methods are used to produce specific Sterically Hindered N-halo-amine-based antimicrobial polymers. The antimicrobial polymer additive is a sterically hindered N-halo-amine including the moiety of 2,2,6,6-tetramethyl-N-chloro-4-piperidinyl structure, and has a molecular weight higher than 350 g/mol.

The present invention relates to antimicrobial polymer additives having a sterically selected from one or more of the following: Poly[[6-[(1,1,3,3-tetramethylbutyl)amino]-s-triazine-2,4-diyl]-N-X-[(2,2,6,6-tetramethyl-4-piperidyl)imino]-hexamethylene-[(2,2,6,6-tetramethyl-4-piperidylimino]]; 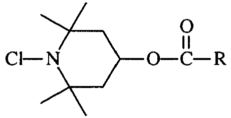 where R is C₁₁-C₂₀, predominantly C₁₆-C₁₈; Poly[(6-morpholino-s-triazine-2,4-diyl)-N-X-[2,2,6,6-tetramethyl-4-piperidyl]imino]-hexamethylene-[(2,2,6,6-tetramethyl-4-piperidyl)imino]]; 1,2,3,4-Butanetetracarboxylic acid, polymer with β,β,β', β'-tetramethyl-2,4,8,10-tetraoxaspiro[5.5]undecane-3,9-diethanol, N-X-2,2,6,6-tetramethyl-4-piperidinyl ester; Poly[oxy[methyl[3-[N-X- (2,2,6,6-tetramethyl4-piperidinyl)-oxy]propylene]silylene]]; mixtures and combinations thereof.

X is Cl or Br. A source of halides may be, e.g., sodium di-X-isocyanurate, sodium hypohalite, N-X-succinimide, and calcium hypohalite, wherein X is selected from Cl or Br. The additive may be mixed with polymeric materials prior to, or after halogenation reactions thereof. Generally, the additive is an antimicrobial against gram-negative bacteria such as *Escherichia coli* (e.g., multi-drug resistant species, such as species that are resistant to sulfonamide) and gram-positive bacteria such as *Staphylococcus aureus* (e.g., multi-drug resistant species, such as species that are resistant to tetracycline, penicillin, streptomycin, and erythromycin) or species that are resistant to the mixtures and combinations or the drugs thereof. The additive may be added to a polymer formed by extrusion, injection molding, hot pressing, coating, painting, solvent casting, mixtures and combinations thereof. Other examples of uses for the additive and polymers formed therewith include, e.g., a bead, a film, a tube, a sheet, a thread, a suture, a gauze, a bandage, an adhesive bandage, a vessel, a container, a cistern, a filter, filaments, yarns, a membrane, a coating, a paint and combinations thereof.

Sterically Hindered N-Halo-amines (SHHs), e.g. Sterically Hindered Chloramines (SHCs) can be formed by the halogenation, e.g. chlorination of sterically hindered amines. It is found in this invention that the specific SHCs have potent, durable and rechargeable antimicrobial activities against both gram-negative and gram-positive bacteria and also has shown activity against a variety of pathogens including bacteria, virus, spores, fungi, bacteria phage and combinations thereof. For example, the additive is antimicrobial against gram-negative bacteria such as *Escherichia coli* (e.g., multi-drug resistant species, such as species that are resistant to sulfonamide), and gram-positive bacteria such as *Staphylococcus aureus* (e.g., multi-drug resistant species, such as species that are resistant to tetracycline, penicillin, streptomycin, and erythromycin), or species that are resistant to the mixtures and combinations or the drugs thereof. Different methods may be used to physically add the specific SHCs into conventional and commercially important polymeric materials (e.g., plastics, rubbers, fibers, coatings, paints etc.) as antimicrobial polymer additives in the range of about 0.01 to about 30 weight percent.

Two methods are employed to incorporate the specific SHHs into commercially important polymeric materials. In the first method, SHHs are first synthesized from SHAs and then added into the polymer materials by solution blending and/or thermal blending. The polymers are then processed into desired forms, e.g., a bead, a film, a tube, a sheet, a thread, a suture, a gauze, a bandage, an adhesive bandage, a vessel, a container, a cistern, a filter, a membrane, a coating, a paint and combinations thereof. In the second method, SHAs are added into the polymeric materials by solution and/or thermal blending. The polymers are processed into desired forms, and then treated with halogen sources to transform the SHAs into SHHs, such as treated with chlorine bleach to transform the SHAs into SHCs. Both methods can be readily used to incorporate the specific SHHs into conventional and commercially important polymers to transform them into antimicrobial polymeric materials. The resultant polymeric materials demonstrate potent antimicrobial activities against both gram-negative and gram-positive bacteria. Moreover, upon the loss of the antimicrobial activity due to extensive uses and/or prolonged storage, the antimicrobial activity can be easily recharged by a simple halogen-treatment. For instance, the antimicrobial activity may be recharged through the chlorination or bromination of pools and spas, washing, soaking or treating the material in a bleach, or treatment use in a water treatment systems including conduits and piping.

Therefore, the present invention provides simple, practical, flexible, and cost-effective technologies to transform conventional and commercially important polymers into durable and rechargeable antimicrobial polymeric materials, which will find wide applications in medical devices, hospital equipment, water purification/delivery systems, food storage and packaging, hygienic products, consumer products, household items, bio-protective applications and other related challenging environments where self-decontamination of the polymeric material is needed.

### Description of the Drawings

For a more complete understanding of the features and advantages of the present invention, reference is now made to the detailed description of the invention along with the accompanying figure in which:

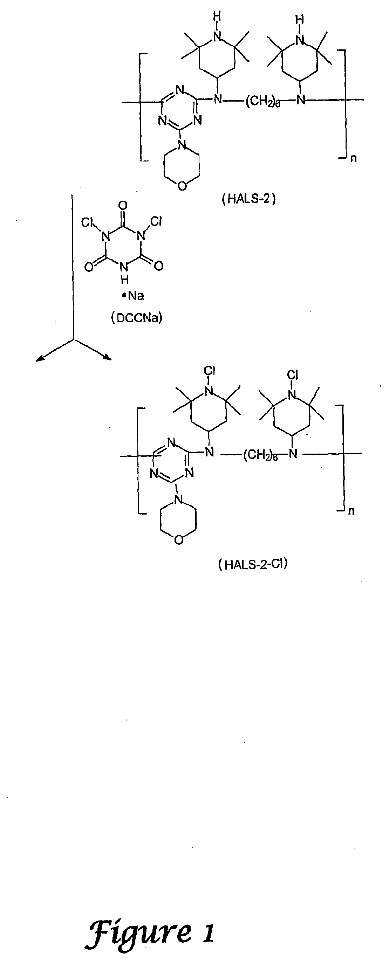

FIGURE 1 shows a pathway for the synthesis of one example of hindered N-halo-amines of the present invention.

As used herein the term "acyl" refers to those groups derived from an organic acid by removal of the hydroxy portion of the acid. Accordingly, acyl is meant to include, for example, acetyl, propionyl, butyryl, decanoyl, pivaloyl, benzoyl and the like.

Substituents for the alkyl and acyl (including those groups often referred to as alkylene, alkenyl, heteroalkylene, heteroalkenyl, alkynyl, cycloalkyl, heterocycloalkyl, cycloalkenyl, and heterocycloalkenyl) can be a variety of groups selected from: --OR', =O, =NR', =N--OR',-NR'R", --SR', -halogen, --SiR'R"R"', --OC(O)R', --C(O)R', --CO₂ R', --CONR'R", -- OC(O)NR'R", --NR" C(O)R', --NR'--C(O)NR"R"', --NR" C(O)₂ R', --NR--C(NRR'R" )=NR"', -- NR'C(NR'R" )=NR"', --NR--C(NR'R" )=NR"', --S(O)R', --S(O)₂ R', --S(O)₂ NR'R", --NRSO₂ R', --CN and --NO₂ in a number ranging from zero to (2m'+1), where m' is the total number of carbon atoms in such radical. R', R" and R'" each independently refer to hydrogen, and heteroalkyl, unsubstituted aryl, aryl substituted with halogens, unsubstituted alkyl, alkoxy or thioalkoxy groups, or aryl-(C₁ -C₁₀)alkyl groups. When a compound of the invention includes more than one R group, for example, each of the R groups is independently selected as are each R', R" and R'" groups when more than one of these groups is present. When R' and R" are attached to the same nitrogen atom, they can be combined with the nitrogen atom to form a 5-, 6-, or 7-membered ring. As used herein, the term "heteroatom" is meant to include oxygen (O), nitrogen (N), sulfur (S) and silicon (Si).

Sterically hindered N-halo-amines are a class of novel rechargeable disinfectants, e.g., N-halamines. Currently, N-halamine-based antimicrobial polymers are produced by three major methods, including functional modification of the polymers, (co)polymerization of polymerizable N-halamine precursors and grafting of polymerizable N-halamine precursors onto the target polymers. Each of these technologies is suitable for the treatment of certain polymers, but a "universal" technology that can treat most conventional and commercially important polymeric materials has not been developed yet. Furthermore, the current technologies involve one or more chemical modifications to prepare the final antimicrobial polymeric materials, which inevitably requires new/special steps and increases cost in the transformation of ordinary polymeric materials into antimicrobial polymers. The present inventors recognized that these difficulties are part of the reasons why commercially important antimicrobial polymers have not been developed.

In this invention, the specific sterically hindered N-halo-amines are physically mixed with conventional and commercially important polymeric materials as antimicrobial additives. As long as the target polymeric materials can be dissolved in solvent(s), or can be melted, they can be manufactured into SHHs-containing polymeric materials, providing durable and rechargeable antimicrobial activities. Because dissolving and melting are conventional processing steps in the manufacturing of most polymeric materials, the present invention provides a universal technology to produce antimicrobial polymers. For polymeric materials that are not soluble and/or meltable, SHHs can be painted or coated onto the polymeric materials.

Furthermore, the specific sterically hindered N-halo-amines used in the present invention are synthesized by a halogenation, e.g., chlorination, treatment of sterically hindered amines either before or after mixing with polymeric materials. Sterically hindered amines are one of the most important photo-stabilizers of polymers, which are none or low toxic, widely available and relative inexpensive.

In summary, compared with the current technologies, the present invention provides simple, practical, flexible and cost-effective approaches to transform conventional and commercially important polymers into antimicrobial polymeric materials. The present invention will find widespread use in numerous areas of application. For example, soluble and/or meltable polymers can be manufactured into durable and rechargeable antimicrobial materials, and a wide range of surfaces can be transformed into durable and rechargeable antimicrobial materials by coating and or coating using this invention. The present invention is also suitable for the treatment of plastics, rubbers, paints, coatings, and fibers, including, but not limited to, polyolefins, polystyrene and its derivatives, ABS, EPDM, cellulose acetate, polyurethane, etc.

The simple, practical, flexible and cost-effective sterically hindered N-halo-amines disclosed herein may be used as polymer additives in the range of about 0.01 to about 30.0 weight percent (wt%), the typical range is about 0.2 to about 5.0 wt%. Both solution and thermal blending can be used in the treatment. The specific sterically hindered N-halo-amines can be formed before or after mixing. The present invention will find wide applicability because it requires no new treatment steps, training and/or new equipment used in the transformation of conventional and commercially important polymers into durable and rechargeable antimicrobial materials.

The applications for use of the present invention include, e.g. antimicrobial treatment of plastics, rubbers, paints, coatings and fibers. The resulting materials may find applications in medical devices, hospital equipment, water purification/delivery systems, food storage and food packaging, hygienic products, consumer products, household items, bio-protective applications, and other related challenging environments where self-decontamination of the polymeric material is needed.

One of the advantages of the present invention is that the specific sterically hindered N-halo-amines are derivatives of commercially available sterically hindered amines (SHAs) based light stabilizers derived from 2,2,6,6-tetramethylpiperidine (14-17). Commercially important SHAs have carefully designed and balanced structures to improve their compatibility with the target polymers to enhance long-term retention of the additive during ageing of the polymers. The present invention uses commercially available SHAs based on 2,2,6,6-tetramethylpiperidine with a molecular weight higher than 350 g/mol; however the skilled artisan will recognize that polymers under 350 g/mol may also be used with the present invention. Listed below are the SHAs used in this invention to produce antimicrobial SHHs: Poly[[6-[(1,1,3,3-tetramethylbutyl)amino]-s-triazine-2,4-diyl]-N-X-[(2,2,6,6-tetramethyl-4-piperidyl)imino]-hexamethylene-[(2,2,6,6-tetramethyl-4-piperidylimino]]; 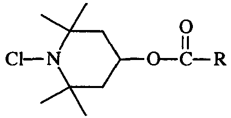 where R is C₁₁-C₂₀, predominantly C₁₆-C₁₈; Poly[(6-morpholino-s-triazine-2,4-diyl)-N-X-[2,2,6,6-tetramethyl-4-piperidyl]imino]-hexamethylene-[(2,2,6,6-tetramethyl-4-piperidyl)imino]]; 1,2,3,4-Butanetetracarboxylic acid, polymer with β,β,β', β'-tetramethyl-2,4,8,10-tetraoxaspiro[5.5]undecane-3,9-diethanol, N-X-2,2,6,6-tetramethyl-4-piperidinyl ester; Poly[oxy[methyl[3-[N-X- (2,2,6,6-tetramethyl4-piperidinyl)-oxy]propylene]silylene]]; mixtures and combinations thereof. The skilled artisan will recognize that many commercially available polymers as well as synthesized polymers may be used with the present invention. Table 1 is a structural list of some of the commercially available SHAs that may be modified as disclosed herein. The SHAs may be modified with halogen sources, e.g. Cl or. Br.

**Table 1.**

| Name | Abbreviation | Molecular formula |
|---|---|---|
| Poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidylimino]] | SHA-2 | 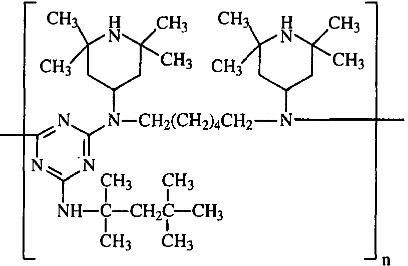 |
| (2,2,6,6-tetramethyl-4-piperidyl) alkyl formate | SHA-3 | 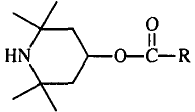 |
| | | Where R is: C₁₁-C₂₀, predominantly, C₁₆-C₁₈ |
| Poly[(6-morpholino-s-triazine-2,4-diyl)[2,2,6,6-tetramethyl-4-piperidyl]imino]-hexamethylene[(2,2,6,6-tetramethyl-4-piperidyl)imino]] | SHA-4 | 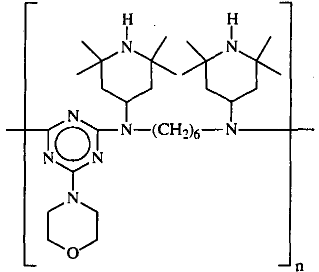 |

Preparation and antimicrobial functions of Sterically Hindered N-halo-amines from SHAs. The sterically hindered N-halo-amines may contain halogen atoms such as Cl or Br. Table 2 is an exemplary structural list of sterically hindered N-halo-amines that contain Cl (SHCs) which may be used as disclosed herein.

**Table 2.**

| Name | Abbreviation | Molecular formula |
|---|---|---|
| Poly[[6-[(1,1,3,3-tetramethylbutyl)amino]-s-triazine-2,4-diyl]-N-chloro-[(2,2,6,6-tetramethyl-4-piperidyl)imino]-hexamethylene-[(2,2,6,6-tetramethyl-4-piperidylimino]] | SHC-2 | 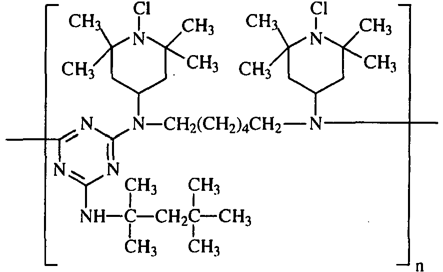 |
| N-chloro-[(2,2,6,6-tetramethyl-4-piperidyl) alkyl formate] | SHC-3 | 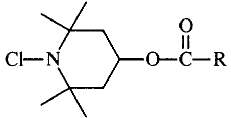 |
| | | Where R is: C₁₁C₂₀, predominantly, C₁₆-C₁₈ |
| Poly[(6-morpholino-s-triazine-2,4-diyl)-N-chloro-[2,2,6,6-tetramethyl-4-piperidyl]imino]-hexamethylene[(2,2,6,6-tetramethyl-4-piperidyl)imino]] | SHC-4 | 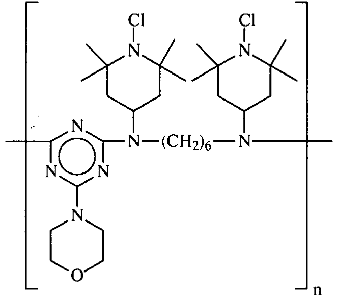 |

Exemplary description of the Synthesis of Sterically Hindered N-Halo-amines. Example 1: SHC-2. A solution of DCCANa (about 8.8 grams, 0.04 mol) in water (about 40ml) was added to a solution of about 5.95g (about 0.04 mol) SHA-2 in toluene (about 20ml). The mixture was vigorously shaken for about 20 minutes. Toluene (about 10 ml) was then added. The precipitated cyanuric acid was filtered off. The organic layer was separated from water and then dried under anhydrous CaCl₂. About 50 ml of methanol was added; the precipitates were collected by filtration, washed with methanol, air-dried over night and stored in a desiccator at room temperature for about 72 hours to reach constant weight to produce a yield of about 75%, a melting point of about 280°C (dec.) and an active chlorine content of about 7.96%.

Example 2: SHC-3. A solution of DCCANa (about 8.8 grams, 0.04 mol) in water (about 40ml) was added to a solution of about 8.2 grams (about 0.04 mol) SHA-3 in toluene (about 20ml). The mixture was vigorously shaken for about 10 minutes. Toluene (about 10ml) was then added. The precipitated cyanuric acid was filtered off. The organic layer was separated from water. After the evaporation of toluene, the solid was collected and recrystallized from petroleum ether to produce a yield of about 79%, a melting point of about 32°C and an active chlorine content of about 7.86%.

Example 3: SHC-4. A solution of DCCANa (about 8.8g, 0.04mol) in water (about 40ml) was added to a solution of about 10.2 grams SHA-4 in toluene (about 20ml). The mixture was vigorously shaken for 20 minutes. Toluene (10ml) was then added. The precipitated cyanuric acid was filtered off. The organic layer was separated from water and then dried under anhydrous CaCl₂. About 50 ml of methanol was added; the precipitates were collected by filtration, washed with methanol, air-dried over night and stored in a desiccator at room temperature for about 72 hours to reach constant weight to produce a yield of about 81%, a melting point of about 280°C (dec.) and an active chlorine content of about 10.6%.

FIGURE 1 illustrates another of the synthesis methods associated with the present invention. The present invention provides that Poly[(6-morpholino-s-triazine-2,4-diyl)[2,2,6,6-tetramethyl-4-piperidyl]imino]-hexamethylene[(2,2,6,6-tetramethyl-4-piperidyl)imino]] (HALS-2) is be treated with sodium dichloroisocyanurate (DCCANa) to produce Poly[(6-morpholino-s-triazine-2,4-diyl)-N-chloro-[2,2,6,6-tetramethyl-4-piperidyl]imino]-hexamethylene[(2,2,6,6-tetramethyl-4-piperidyl)imino]] (HALS-2-Cl).

Furthermore, Poly[(6-morpholino-s-triazine-2,4-diyl)[2,2,6,6-tetramethyl-4-piperidyl]imino]-hexamethylene[(2,2,6,6-tetramethyl-4-piperidyl)imino]] is recharged to Poly[(6-morpholino-s-triazine-2,4-diyl)-N-chloro-[2,2,6,6-tetramethyl-4-piperidyl]imino]-hexamethylene[(2,2,6,6-tetramethyl-4-piperidyl)imino]] using a source of halides (bleach).

Antimicrobial properties of the synthesized SHCs. The bacteria used in this study are as follows: *Escherichia coli,* gram-negative, ATCC 15597; *Staphylococcus aureus,* gram-positive, ATCC 6538; *Escherichia coli,* gram-negative, resistant to sulfonamide, ATCC 29214; and *Staphylococcus aureus* subsp. *aureus*, gram-positive, resistant to tetracycline, penicillin, streptomycin, and erythromycin and ATCC 14154. Although, the skilled artisan will recognize that other bacteria may be treated with the present invention.

Antimicrobial Procedure: SHC samples were crushed into powders. A standard sieve was used to collect the powders in the 60-80 mesh (about 0.42-0.31mm) range. One gram of each sample was packed into a column (I.D.: about 6mm). About 1 ml of an aqueous suspension containing about 10^{6∼7} CFU/mL (colony forming units per milliliter) of the bacteria was passed through the columns containing the corresponding samples. The flow rate was controlled by compressed air (about 0.1-10 ml/min). The effluent was collected, serially diluted, and each dilution was placed onto nutrient agar plates. The same procedure was also applied to the un-chlorinated SHAs powders as control. Bacterial colonies on plates were counted after incubation at about 37°C for about 24 hours. Results: No bacteria growth was observed on the agar plates after about 24 hours of incubation, i.e. the Sterically Hindered N-Halo-amines provided total kill of the microorganisms under the test conditions mentioned above.

Durability and Rechargeability of the SHCs. Durability: After storage under ambient conditions (e.g., temperature about 25°C ± 3, humidity about 60±10%) for a certain period of time, the active chlorine contents in the SHC samples were titrated and the results were listed in Table 3.

| TABLE 3 | Active chlorine content, wt.% | | |
|---|---|---|---|
| | 2 month | 4 month | 6 month |
| SHC-2 | 8.70 | 8.60 | 8.54 |
| SHC-3 | 8.10 | 7.70 | 7.30 |
| SHC-4 | 10.2 | 10.5 | 10.0 |

Rechargeability: The SHC powders were neutralized by immersing in about 0.1 mol/L sodium thiosulfate solution at room temperature under shaking for about 30 minutes, and then chlorinated according to the synthesis procedures mentioned above. After each chlorination, the samples were washed thoroughly with a large amount of distilled water. The active chlorine contents of the SHC samples after about 50 cycles of "neutralization-chlorination" treatment were essentially unchanged.

Preparation and antimicrobial activities of commercially important polymers containing Sterically Hindered N-Halo-amines. To incorporate SHCs into commercially important polymeric materials, two methods were developed. In the first method, SHA samples were added into polymeric materials by conventional processing technologies including extrusion, injection molding, thermal pressing, coating, painting or solvent casting. Then, the SHA-containing samples were halogenated to transfer SHAs into SHHs. In the second method, SHAs were first transferred into SHHs and then incorporated into commercially important polymers by extrusion, injection molding, thermal pressing, coating, painting or solvent casting. Both methods are feasible approaches to incorporate SHHs into polymeric materials and the resultant polymeric materials demonstrated potent, durable and rechargeable antimicrobial activities.

Preparation of antimicrobial polymeric materials using the first method disclosed hereinabove and the antimicrobial activities of the resultant polymers. Incorporating SHAs into polymers: The additives of the present invention were formed into polymers by extrusion, injection molding, coating, painting, hot pressing and solvent casting; typical examples are described below:
Extrusion: Polymer films-Polymer pellets and SHA powders (about 0.01-30 wt% of the polymers) were extruded as films of about 400-500 µm thickness from a Laboratory Mixing Extruder. The temperatures of the barrel and the die were kept at about 120-200 and about 160-200°C respectively.
Extrusion: Polymer tubes-Polymer pellets and SHA powders (about 0.01-30 wt% of the polymers) were extruded as a tube (I.D.: about 3mm, E.D.: about 5mm) from the Laboratory Mixing Extruder. The temperatures of the barrel and the die were kept at 120-200 and 160-200°C, respectively.
Extrusion: Fibers-Polymer pellets and SHA powders (about 0.01-30 wt% of the polymers) were extruded as fibers from the Laboratory Mixing Extruder. The temperatures of the barrel and the die were kept at about 120-200 and about 160-200°C, respectively.
Injection molding: Polymer sheets-Polymer pellets and SHA powders (about 0.01-30 wt% of the polymers) were mixed, homogenized and then injection molded into a sheet of about 1mm thickness. The machine used was a Minimax Laboratory Molder (e.g., equipment with a test mould). The temperature of the mixing cup was about 120-200°C. Test mould was kept at ambient temperature.
Hot pressing: Polymer films-Polymer pellets and SHA powders (about 0.01-30 wt% of the polymers) were mixed and homogenized on a Minimax Laboratory Molder at about 120-200°C. Then the blended materials were hot pressed into about a 300 µm thickness film at about 120-200°C using a hot press.
Solvent casting/painting/coating: Polymeric materials and SHA powders (about 0.01-30 wt% of the polymers) were dissolved in chloroform, acetone, THF, DMF, or DMSO. The solution was cast, sprayed or brushed onto any surfaces. After evaporation of the solvent, films, paintings or coatings are obtained.

Described below are examples to make the SHA-Containing polymer articles. Example 4: Making SHA-containing PP Tubes. about 20 grams of PP pellets and about 0.8 grams SHA-3 powders (about 4 wt% of PP) were mechanically mixed and then extruded as a tube (I.D.: about 3mm, E.D.: about 5mm) from the Laboratory Mixing Extruder. The temperatures of the barrel and the die were kept at about 160 and 180°C respectively. The extruded PP tube from the die of the extruder was under the traction of the CSI-194T Take Up Apparatus.

Example 5: Making SHA-containing PE sheets. about 10 grams of PE pellets and about 0.02 grams of SHA-2 powders (about 0.2 wt% of PE) were mixed, homogenized for 5min, and then injection molded into a sheet of 1mm thickness. The machine used was a Minimax Laboratory Molder equipment with a test mould. The temperature of the mixing cup was about 160°C. Test mould was kept at ambient temperature.

Example 6: Solvent casting SHA-containing PS films. To about 70 ml chloroform containing about 7 grams PS pellets was added about 0.42 grams SHA-4 powders (about 6 wt% of PS), and then vigorously stirred. The sample solution was cast onto a clean glass surface. The PS films of about 200 µm thickness were formed after evaporation of solvent over night.

Transformation of SHA-containing plastics into SHC-containing plastics: The additives of the present invention were formed into polymers by extrusion, injection molding, hot pressing and solvent casting/coating/painting as described hereinabove.

General halogenation procedures: All SHA-containing polymer samples (e.g., films, sheets, fibers and tubes) were chlorinated with a diluted household bleach (e.g., Clorox) containing about 0.6% sodium hypochlorite under constant shaking. The pH values were in the range of about 7 to about 12 and the chlorination time was in the range of about 10 minutes to about 4 hours. After chlorination, the samples were thoroughly washed with large amount of distilled water to remove free chlorine (e.g., the washing water was checked with chlorine strips with about 0.5 ppm of accuracy).

Example 7: PP extruded tubes containing about 4 wt% SHA-3 were chlorinated with a diluted household bleach (e.g., Clorox) containing about 0.6% sodium hypochlorite under constant shaking. The pH value and the chlorination time were kept at about 7.0 and about 1 hour, respectively. After chlorination, the PP tubes were thoroughly washed with a large amount of distilled water to remove free chlorine. The active chlorine content in the sample was about 159 ppm/gram determined by titration with 0.001 sodium thiosulfate solution.

Example 8: PE injection molded sheets containing about 0.2 wt% SHA-2 were chlorinated with a diluted household bleach containing about 0.6% sodium hypochlorite under constant shaking. The pH value and the chlorination time were kept at about 9.0 and about 2 hours, respectively. After chlorination, the PE sheets were thoroughly washed with a large amount of distilled water to remove free chlorine. The active chlorine content in sample was about 120 ppm/gram determined by titration with about 0.001 sodium thiosulfate solution.

Example 9: PS solvent casting films containing about 6 wt% SHA-4 were chlorinated with a diluted household bleach (e.g., Clorox) containing about 0.6% sodium hypochlorite under constant shaking. The pH value and the chlorination time were kept at about 7.0 and about 4 hours, respectively. After chlorination, the PS films were thoroughly washed with a large amount of distilled water to remove free chlorine. The active chlorine content in samples was about 394 ppm/gram determined by titration with about 0.001 sodium thiosulfate solution.

Antimicrobial activity of the SHC-containing materials as described hereinabove: The polymeric materials were tested for antimicrobial properties using the following bacteria: *Escherichia coli,* gram-negative, ATCC 15597; *Staphylococcus aureus,* gram-positive, ATCC 6538; *Escherichia coli,* gram-negative, resistant to sulfonamide, ATCC 29214; and *Staphylococcus aureus* subsp. *aureus*, gram-positive, resistant to tetracycline, penicillin, streptomycin, and erythromycin, ATCC 14154.

General Procedures: about 10 µL of an aqueous suspension containing about 10^{6∼7} CFU/mL bacteria was placed onto the surfaces of the polymeric materials. After different contact time, the polymeric materials were transferred into about 100 mL of about 0.03 wt% sodium thiosulfate aqueous solution. The resultant solution was vigorously shaken for about 5 minutes. An aliquot of the solution was serially diluted, and 100 µL of each dilution was placed onto nutrient agar plates. The same procedure was also applied to an un-chlorinated sample as a control. Viable bacterial colonies on the agar plates were counted after incubation at about 37°C for about 24 hours.

Example 10: About 100 µL of an aqueous suspension containing about 10^{6∼7} CFU/mL of the bacteria were dropped into the chlorinated PP extruded tube, whose bottom was sealed. The tube was shaken for a certain period of time. Then, the tube was put into about 100 mL of about 0.03 wt% sodium thiosulfate aqueous solution. The resultant solution was vigorously shaken for about 5 minutes. An aliquot of the solution was serially diluted, and about 100 µL of each dilution was placed onto nutrient agar plates. The same procedure was also applied to an un-chlorinated sample as a control. Viable bacterial colonies on the agar plates were counted after incubation at about 37°C for about 24 hours.

PP extruded tube containing about 159 ppm/gram of active chlorine inactivated about 90% of all the tested bacteria in a contact time of about 10 minutes. After about 60 min of contact time, the same tube provided total kill of the bacteria.

Example 11: About 10 µL of an aqueous suspension containing about 10^{6∼7} CFU/mL bacteria was placed onto the surface of the chlorinated PE injection molded sheet (about 2x2 cm²), and the sheet was covered with another identical sheet. After different contact time, the sheets were transferred into about 100 mL of about 0.03 wt% sodium thiosulfate aqueous solution. The resultant solution was vigorously shaken for about 5 minutes. An aliquot of the solution was serially diluted and about 100 µL of each dilution was placed onto nutrient agar plates. The same procedure was also applied to an un-chlorinated sample as a control. Viable bacterial colonies on the agar plates were counted after incubation at about 37°C for about 24 hours.

PE injection molded sheet containing about 120 ppm/gram of active chlorine inactivated about 99.99% of all the tested bacteria in a contact time of less than about 30 seconds. After about 5 minutes of contact time, the same sheet provided total kill of the bacteria.

Example 12: About 10 µL of an aqueous suspension containing about 10^{6∼7} CFU/mL bacteria was placed onto the surface of the chlorinated PS solvent casting film, and the film was covered with another identical film. After different contact time, the film was transferred into about 100 mL of about 0.03 wt% sodium thiosulfate aqueous solution. The resultant solution was vigorously shaken for about 5 minutes. An aliquot of the solution was serially diluted and about 100 µL of each dilution was placed onto nutrient agar plates. The same procedure was also applied to an un-chlorinated sample as a control. Viable bacterial colonies on the agar plates were counted after incubation at about 37°C for about 24 hours.

PS solvent casting films containing about 394 ppm/gram of active chlorine inactivated about 99.99% of all the tested bacteria in a contact time of about 15 seconds. After about 3 minutes, the same films killed all the challenging cells.

Durability and rechargeability of the antimicrobial activities: All polymer samples (e.g., films, sheets, fibers, coatings, paints and tubes) were stored under ambient conditions (e.g., temperature: e.g., 25°C ± 3, humidity: e.g., 60 ± 10%). The active chlorine content in sample was determined by titration at intervals of about 2, 4 and 6 months. For all polymer samples, the active chlorine content was unchanged within 6 months. Two typical examples were listed in Table 4.

**Table 4. Active chlorine contents of PP and PE films during storage.**

| | Active chlorine content (ppm/g) | | | |
|---|---|---|---|---|
| Sample | As prepared | 2 months | 4 months | 6 months |
| PS solvent casting film (6 wt% SHA-4) | 394 | 386 | 396 | 390 |

Rechargeability: Chlorinated polymer samples were treated in about 0.1 mol/L sodium thiosulfate solution at room temperature for about 30 minutes under constant shaking. After treatment, the samples were thoroughly washed with distilled water, and then bleached again according to the procedure described hereinabove. After each chlorination, the samples were washed thoroughly with a large amount of distilled water. The active chlorine contents of the samples after about 50 cycles of "neutralization-chlorination" treatments were essentially unchanged.

Preparation of antimicrobial polymeric materials using the second method and the antimicrobial activities of the resultant polymers. Synthesis of the Sterically Hindered N-Halo-amines, e.g. Sterically Hindered Chloramines: Structures of SHC-2, SHC-3 and SHC-4 are shown in Table 2. They were prepared according to the methods described hereinabove in Examples 1-3.

Incorporating SHCs into polymers: Extrusion: Polymer tubes-Polymer pellets and SHC powders (about 0.01-30 wt% of the polymers) were extruded as tubes (I.D.: about 3mm, O.D.: about 5mm) from the Laboratory Mixing Extruder. The temperatures of the barrel and the die were kept at about 120-200 and about 140-200°C, respectively.

Extrusion: Fibers-Polymer pellets and SHC powders (about 0.01-30 wt% of the polymers) were extruded as fibers from the Laboratory Mixing Extruder. The temperatures of the barrel and the die were kept at about 120-200 and about 160-200°C, respectively.

Injection molding: Polymer sheets-Polymer pellets and SHC powders (about 0.01-30 wt% of the polymers) were mixed, homogenized and then injection molded into a sheet of 1mm thickness. The machine used was a Minimax Laboratory Molder equipment with a test mould. The temperature of the mixing cup was about 120-200°C. Test mould was kept at ambient temperature.

Hot pressing: Polymer films-Polymer pellets and SHC powders (about 0.01-30 wt% of the polymers) were mixed and homogenized on a Minimax Laboratory Molder at about 120-200°C. Then the blended materials were hot pressed into a 300 µm thickness film at about 120-200°C using a hot press.

Solvent casting/painting/coating: Polymer pellets and SHC powders (about 0.01-30 wt% of polymers) were dissolved in acetone, chloroform, THF, DMF or DMSO. The solution was cast, sprayed or brushed onto any surfaces. After evaporation of the solvent, films, coatings or paints were obtained.

Example 13: Making SHC-containing PP tubes. About 20 grams of PP pellets and about 0.8 grams SHC-3 powders (about 4 wt% of PP) were mechanically mixed and then extruded as a tube (I.D.: about 3mm, E.D.: about 5mm) from the Laboratory Mixing Extruder. The temperatures of the barrel and the die were kept at about 150 and 160°C respectively. The extruded PP tube from the die of the extruder was under the traction of a Take Up Apparatus. The active chlorine content in samples was about 105 ppm/gram determined by titration with about 0.001 sodium thiosulphate solution.

Example 14: Making SHC-containing PE sheets. About 10 grams of PE pellets and about 0.02 grams of SHC-2 powders (about 0.2 wt% of PE) were mixed, homogenized for about 2 minutes and then injection molded into a sheet of about 1 mm thickness. The machine used was a Minimax Laboratory Molder equipment with a test mould. The temperature of the mixing cup was about 145°C. Test mould was kept at ambient temperature. The active chlorine content in samples was about 88 ppm/gram determined by titration with about 0.001 sodium thiosulphate solution.

Example 15: Solvent casting SHC-containing PS Films. To about 70 ml chloroform containing about 7 gram PS pellets was added about 0.42 gram SHC-4 powders (about 6 wt% of PS), and then vigorously stirred. The sample solution was cast onto a clean glass surface. The PS films of about 200 µm thickness were formed after evaporation of solvent over night. The active chlorine content in samples was about 315 ppm/gram determined by titration with about 0.001 sodium thiosulphate solution.

Antimicrobial activity of the SHC-containing materials as described hereinabove.

The polymers were tested for antimicrobial properties using the following bacteria: *Escherichia coli,* gram-negative, ATCC 15597; *Staphylococcus aureus,* gram-positive, ATCC 6538; *Escherichia coli,* gram-negative, resistant to sulfonamide, ATCC 29214; and *Staphylococcus aureus* subsp. *aureus*, gram-positive, resistant to tetracycline, penicillin, streptomycin, and erythromycin and ATCC 14154.

General Procedures: About 10 µL of an aqueous suspension containing about 10^{6∼7} CFU/mL bacteria was placed onto the surfaces of the polymeric materials. After different contact time, the polymeric materials were transferred into about 100 mL of about 0.03 wt% sodium thiosulfate aqueous solution. The resultant solution was vigorously shaken for about 5 minutes. An aliquot of the solution was serially diluted, and about 100 µL of each dilution was placed onto nutrient agar plates. The same procedure was also applied to an un-chlorinated sample as a control. Viable bacterial colonies on the agar plates were counted after incubation at about 37°C for about 24 hours.

Example 16: About 10 µL of an aqueous suspension containing about 10^{6∼7} CFU/mL bacteria was dropped into the chlorinated PP extruded tube, whose bottom end was sealed. The tube was constantly shaken for a certain period of time. Then, the tube was transferred into about 100 mL of about 0.03 wt% sodium thiosulfate aqueous solution. The resultant solution was vigorously shaken for about 5 minutes. An aliquot of the solution was serially diluted and about 100 µL of each dilution was placed onto nutrient agar plates. The same procedure was also applied to an un-chlorinated sample as a control. Viable bacterial colonies on the agar plates were counted after incubation at about 37°C for about 24 hours.

PP extruded tube containing about 105 ppm/gram of active chlorine inactivated about 90% of all the tested bacteria in a contact time of about 15 minutes. After about 120 minutes of contact time, the same tube provided total kill of the bacteria.

Example 17: About 10 µL of an aqueous suspension containing about 10^{6∼7} CFU/mL bacteria was placed onto the surface of the chlorinated PE injection molded sheet (about 2x2 cm²), and the sheet was covered with another identical sheet. After different contact time, the sheets were transferred into about 100 mL of 0.03 wt% sodium thiosulfate aqueous solution. The resultant solution was vigorously shaken for about 5 minutes. An aliquot of the solution was serially diluted and about 100 µL of each dilution was placed onto nutrient agar plates. The same procedure was also applied to an un-chlorinated sample as a control. Viable bacterial colonies on the agar plates were counted after incubation at about 37°C for about 24 hours.

PE injection molded sheet containing about 88 ppm/gram of active chlorine inactivated about 99.99% of all the tested bacteria in a contact time of less than about 5 minutes. After about 15 minutes of contact time, the same sheet provided total kill of the bacteria.

Example 18: About 10 µL of an aqueous suspension containing about 10^{6∼7} CFU/mL bacteria was placed onto the surface of the chlorinated PS solvent casting film, and the film was covered with another identical film. After different contact time, the films were transferred into about 100 mL of about 0.03 wt% sodium thiosulfate aqueous solution. The resultant solution was vigorously shaken for about 5 minutes. An aliquot of the solution was serially diluted and about 100 µL of each dilution was placed onto nutrient agar plates. The same procedure was also applied to an un-chlorinated sample as a control. Viable bacterial colonies on the agar plates were counted after incubation at about 37°C for about 24 hours.

PS solvent casting films containing about 315 ppm/gram of active chlorine inactivated about 99.99% of all the tested bacteria in a contact time of about 1 minute. After about 5 minutes, all the challenging cells were killed.

Durability: All polymer samples (e.g., films, sheets, fibers, paints, coating, and tubes) were stored under ambient conditions (temperature: about 25°C ± 3, humidity: about 60 ± 10%). The active chlorine content in sample was determined by titration at intervals of 2, 4 and 6 months. For all polymer samples, the active chlorine content was unchanged within 6 months. A typical example is listed in Table 5.

**Table 5. Active chlorine contents of PS films during storage.**

| | Active chlorine content (ppm/g) | | | |
|---|---|---|---|---|
| Sample | As prepared | 2 months | 4 months | 6 months |
| PS solvent casting film (6 wt% SHC-4) | 315 | 302 | 298 | 290 |

Rechargeability: Chlorinated polymer samples (e.g., films, sheets, coating, paints, and tubes) were treated in about 0.1 mol/L sodium thiosulfate solution at room temperature for about 30 minutes under constant shaking. After treatment, the samples were thoroughly washed with distilled water, and then bleached again according to the procedure described above. After each chlorination the samples were washed thoroughly with a large amount of distilled water. The active chlorine contents of the samples after about 50 cycles of "neutralization-chlorination" treatments were essentially unchanged.

The applications for the present invention cover a spectrum of products, from healthcare professional uses to the broader areas of sanitation, infection and odor control in military and institutional hygienic practices. The present invention also includes consumer uses especially in the hospitality industry, athletic wear and sports facilities sectors. These uses are fueled in recent times by an explosion of concern about new infectious disease problems, such as HIV/AIDS and avian influenza, the growing risk from antibiotic-resistant bacteria such as MRSA and VRE, and the age-old problems of hepatitis, tuberculosis, and *E. coli*.

For example, public awareness and institutional costs of hospital-acquired infections is fueling the search for better products. Food industries have become acutely aware of the risks from various bacteria such as the deadly *E*. *coli* O157:H7. The food industry has also become increasingly vulnerable to liability with the advent of better detection methods that can now trace food illness back to its source. The world's militaries have never solved the problem of fungal growth (e.g., "jungle rot") for soldiers on patrol that must wear their clothes for long periods between launderings. Fungal growth can result in discomfort and infection leading to a loss of manpower.

The plastics and fabrics made using the present invention are anti-bacterial, anti-viral, anti-fungal and anti-odor with activity greater than silver-impregnated plastics and fabrics, the next-best approach. The present invention includes plastic parts, films, tubing, cotton and synthetic fabrics and antimicrobial plastic additive that are antimicrobial in nature. The plastic additive is compatible with standard plastics including PET, polyethylene, PVC, polypropylene, and polystyrene. Fiber and fabric manufacturers can use the plastic additive without altering their normal fiber extrusion process. Polyester; nylon, and polypropylene fabrics can now be made permanently antimicrobial.

Additionally, low-melt-temperature plastics such as polystyrene, PVC and Polyethylene can be pre-chlorinated by adding the present invention to plastics to include non-woven fabrics, e.g., masks, wipes, shoe and head covers, diapers, wound care, and disposable healthcare fabrics, disposable medical plastics and packaging e.g., medical packaging to ensure sterility, food packaging to protect against bacteria, anti-mold packaging to extend shelf-life. Additional applications of the present invention are listed in Tables 6 and 7 below.

**Table 6**

| **Antimicrobial Plastic Additive** | **Product Examples** | | |
|---|---|---|---|
| Carpet & Upholstery | | • Healthcare carpeting. | |
| | | | ○ Anti-infection (e.g., bacteria, viruses, and funguses). |
| | | | ○ Anti-odor. |
| | | • Consumer carpeting for pet owners. | |
| Cleaning Tools | Consumer, healthcare, dental, food service, food factory. | | |
| | | • Rags. | |
| | | • Mops. | |
| | | • Sponges. | |
| | | • Disposables, non-woven wipes, etc. | |
| | | • Toothbrushes. | |
| Gloves | Anti-infection, anti-cross contamination gloves for healthcare, food factory, food service. | | |
| | | | • Nitrile. |
| | | | • Vinyl. |
| | | | • Knit. |
| Medical Nonwovens (garments / masks) | Develop antibacterial, antiviral nonwoven products (e.g., disposable and reusable) for healthcare, food factory, food service, first responders (e.g., medics, firefighters) and military (e.g., anti-germ warfare). | | |
| | | | • Antiviral masks. |
| | | | • Wound dressings. |
| | | | • Patient and staff apparel (e.g., scrub apparel and patient gowns). |
| | | | • Tapes and electrodes. |
| | | | • Filter media. |
| | | | • Hot/cold therapy bags. |
| | | | • Stretcher covers. |
| | | | • Shoe & head covers. |
| | | | • Isolation gowns. |
| | | | • Fabrics for wound dressings, prep pads, finger bandages, operation swabs, medical tape base, medical wipes, hospital bed linens and ostomy bags. |
| | | | • Disposable absorbent pads (e.g., medical underpads for nursing homes and operating rooms, ambulance floor pads, trauma pads for bodily contact, lab bench pads, transportation containment pouches, etc. |
| Water/Air Filtration | | | • Anti-slime filters, e.g., pools and spas. |
| | | | • Healthcare filtration, e.g., anti-slime filters in dialysis machines, endoscope cleaning machines, etc. |
| | | | • Drinking water purification and storage. |
| | | | • Industrial water treatment. |
| | | | • Consumer, industrial and healthcare air filtration |
| Food Processing/ manufacturing | Cross-contamination protection. | | |
| | | | • Floor and wall sealing systems. |
| | | | • Uniforms and gloves. |
| | | | • Conveyor belts. |
| | | | • Cutting boards. |
| | | | • Food film covering. |
| Paints & Coatings | | | • Paints. |
| | | | • Film covering. |
| | | | • Stains. |
| Medical Devices | | | • Catheters (venous, urinary, tracheal, dialysis) |
| | | | • Instruments (e.g., stethoscopes, blood pressure cuffs) |
| | | | • Patient touch surfaces (e.g., mattresses, bed railings, slings, bathroom surfaces). |
| Wound Care & Chronic Skin Infections | | | • Pads. |
| | | | • Sponges. |
| | | | • Bandages. |
| | | | • Burns. |
| | | | • Chronic Wound. |
| | | | • Dermal Lesions. |
| | | | • Diabetic Neuropathic Foot Ulcer. |
| | | | • Edema. |
| | | | • First- & Second-Degree Bums. |
| | | | • Infected Wound. |
| | | | • Necrotic Wound. |
| | | | • Neuropathic Ulcer. |
| | | | • Skin at Risk from Radiation Complications, Excess Moisture, Skin Grafts, Stage I, II, III, IV Pressure Ulcers, Surgical Incisions. |
| Packaging | | | • Medical packaging to ensure sterility. |
| | | | • Food packaging to protect against bacteria. |
| | | | • Anti-mold packaging to extend shelf-life. |

**Table 7**

| **Antimicrobial Textiles** | **Product Examples** | |
|---|---|---|
| Medical Textiles | Reusable healthcare textiles for acute care, long-term care, dental industries to provide infection protection against microbes including bacteria, viruses, and funguses. | |
| | | • Sheets and pillow cases. |
| | | • Patient wear. |
| | | • Uniforms for nurses, doctors, cleaning staff, dentists. |
| | | • Privacy curtains. |
| | | • Toweling. |
| | | • Fabric laminations (e.g., film, net and adhesive). |
| | | • Incontinence products (e.g., bed pads and patient wear). |
| | | • Antiviral woven reusable masks (e.g., Avian Influenza). |
| | | • Medical barriers. |
| Military Textiles | | • Underwear and socks. |
| | | • Battle dress uniforms. |
| | | • Anti-germ warfare uniforms. |
| Apparel and linen | Fitness club members, Sports Leagues (e.g., NFL, NBA, NHL, WWE, colleges, high schools), Hotels, Gaming Casinos, Linens and uniforms for food service operations, food factories and prison inmates. | |
| | | • Outer wear, socks, underwear. |
| | | • Outdoor and hunting apparel. |
| | | • Footwear (anti-odor and anti-fungal). |
| Medicated Products | | • Medicated socks and underwear. |
| | | • Wound care. |
| Consumer Disposable Non-Wovens | | • Adult incontinence disposable diapers (e.g., anti-odor) |
| | | • Baby diapers (e.g., anti-diaper rash) |
| | | • Feminine hygiene products (e.g., tampons, pads) |
| | | • Home wipers for cleaning |
| Building Products | | • Biofilm remediation for plastic tubing and pipe applications in these markets: potable water storage, PVC potable water plumbing and piping in chlorinated systems (e.g., municipal and construction), medical tubing, dental tubing, manufacturing process water. |
| | | • Anti-mold grout and caulk |
| | | • Anti-mold wall board |
| | | • Countertops and flooring |
| | | • Anti-mold, antimicrobial paints and coatings |
| | | • Low-cost water purification (low chlorine, antiviral) |
| | | • Safe water storage (e.g., many uses such as the roof-top tanks ubiquitous in many parts of the world) |
| | | • Military coatings. |

The resultant polymeric materials of the present invention demonstrate potent antimicrobial and/or disinfectant activities against a variety of pathogens including bacteria, virus (e.g., retrovirus, herpesvirus, adenovirus, lentivirus, etc.), spores, fungi, bacteria phage and combinations thereof. Further examples of Bacteria includes but is not limited to Staphylococcus aureus (Staph), Salmonella choleraesuis, Pseudomonas aeruginosa, Streptococcus pyogenes (Strep), Escherichia coli 0157:H7 (E. coli), Shigella dysenteriae and combinations thereof.

Further examples of viruses include but are not limited to polio virus, TT virus, herpes virus, hepatitis virus, or human immunodeficiency virus (HIV), HCV, HAV, HIV-1, HIV-2, HHV-6, HSV-1, HSV-2, CMV, EBV, rotavirus, adenoviruses, respiratory syncytial virus, Cytomegalovirus, parvovirus, Ebola virus, Varicella-zoster virus, poliovirus, Dengue virus, Haemophilus influenza, Influenza, Mycobacterium bovis (Tuberculosis), Rotavirus, Rubella virus, Rhinovirus (Cold virus), measles virus, mumps virus, influenza viruses and combinations thereof. Further examples of Fungi include but not limited to Candida albicans, *Aspergillus, Blastomyces, Coccidioides,* Cryptococcus, *Epidermophyton, Histoplasma,* Mucorales, *Microsporum,* Paracoccidioides brasiliensis, Sporothrix schenckii, *Trichophyton,Trichophyton* mentagrophytes and combinations thereof. In addition the present invention may be used to remove odors through antimicrobial and/or disinfectant activities against a variety of odor causing pathogens. Further examples bacteria phage include but are not limited to Enterobacteria phage MS2, T4 bacteriophage, T1-T7 bacteriophage;, Mu phage, phage ϕX174, λ phage, R17 phage, M13 phage, G4 phage, P1 phage, P2 phage N4 phage, Φ6 phage and combinations thereof.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

All of the compositions and/or methods disclosed and claimed herein can be made and executed without undue experimentation in light of the present disclosure. While the compositions and methods of this invention have been described in terms of preferred embodiments, it will be apparent to those of skill in the art that variations may be applied to the compositions and/or methods and in the steps or in the sequence of steps of the method described herein without departing from the concept, spirit and scope of the invention.

### References

(1) Binder, S.; Levitt, A. M.; Sacks, J. J.; Hughes, J. M. Science 1999, 284, 1311-1313.
(2) Worley, S. D.; Sun, G. Trends Polym. Sci. 1996, 4, 364-370.
(3) Tiller, J. C.; Liao, C.; Lewis, K.; Klibanov, A. M. Proc. Natl. Acad. Sci. USA. 2001, 98, 5981-5985.
(4) Lee, S. B.; Koepsel, R. R.; Morley, S. W.; Matyjaszewski, K.; Sun, Y.; Russell, A. J.; Biomacromolecules, 2004, 5, 877-882.
(5) Chen, C. Z.; Beck-Tan, N. C.; Dhurjati, P.; van Dyk, T. K.; LaRossa, R. A.; Cooper, S. L.; Biomacromolecules, 2000, 1, 473-480.
(6) Tew, G. N.; Liu, D.; Chen, B.; Doerksen, R. J.; Kaplan, J.; Carroll, P. J.; Klein, M. L.; DeGrado, W. F. Proc. Natl. Acad. Sci. USA. 2002, 99, 5110-5114.
(7) Albert, M.; Feiertag, P.; Hayn, G.; Saf, R.; Honig, H. Biomacromolecules, 2003, 4, 1811-1817.
(8) Rabea, E. I.; Badawy, M. E. T.; Stevens, C. V.; Smagghe, G.; Steurbaut, W. Biomacromolecules, 2003, 4, 1457-1465.
(9) Muzzarelli, R. A. A.; Muzzarelli, C.; Tarsi, R.; Miliani, M.; Gabbanelli, F.; Cartolari, M. Biomacromolecules, 2001; 2, 165-169.
(10) Braun, M.; Sun, Y. J. Polym. Sci., Part A: Polym. Chem. 2004, 42, 3818-3827.
(11) Sun, Y.; Sun, G. J. Appl. Polym. Sci. 2003, 88, 1032-1039.
(12) Eknoian, M. W.; Putman, J. H.; Worley, S. D. Ind. Eng. Chem. Res. 1998, 37, 2873-2877.
(13) Appendini, P.; Hotchkiss, J. H. Innov. Food Sci. Emerg. Tech. 2002, 3, 113-126.
(14) Plastics additives handbook; Zweifel, H. Ed.; Hanser Gardner Publications: Cincinnati, OH, 2001.
(15) Plastic additives and modifiers handbook; Edenbaum, J. Ed.; Van Norstrand Reinhold: New York, 1992.
(16) Plastic additives; Pritchard, G. Ed.; Chapman & Hall: London, 1998.
(17) Stabilization of polymeric materials; Zweifel, H. Ed.; Springer: Berlin, 1998.
(18) Photostabilization of polymers principles and applications; Rabek, J. F. Ed.; Elsevier: New York, 1990.
(19) Bodor, N.; Kaminski, J. J.; Worley, S. D.; Colton, R. J.; Lee, T. H.; Rabalais, J. W. J. Pharm. Sci. 1974, 63, 1387-1391.
(20) Zakrzewski, J. Synth. Commun. 1988, 18, 2135-2140.
(21) Nishimoto, S.; Chaisupakitsin, M.; Inui, T. Radiat. Phys. Chem. 1992, 39, 413-419.
(22) Sun, Y.; Sun, G. Macromolecules 2002, 35, 8909-8912.
(23) Eknoian, M. W.; Putman, J. H.; Worley, S. D. Ind. Eng. Chem. Res. 1998, 37, 2873-2877.

## Claims

1. An antimicrobial polymer additive comprising a sterically hindered N-halo-amine with a molecular weight higher than 350 g/mol, wherein the sterically hindered N-halo-amine is selected from the group consisting of:
- Poly[[6-[(1,1,3,3-tetramethylbutyl)amino]-s-triazine-2,4-diyl]-N-X-[(2,2,6,6-tetramethyl-4-piperidyl)imino]-hexamethylene-[(2,2,6,6-tetramethyl-4-piperidylimino]];
- 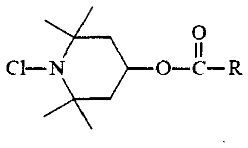 where R is C₁₁-C_{20,} preferably C₁₆-C₁₈;
- Poly[(6-morpholino-s-triazine-2,4-diyl)-N-X-[2,2,6,6-tetramethyl-4-piperidyl]imino]-hexamethylene[(2,2,6,6-tetramethyl-4-piperidyl)imino]];
- Poly[oxy[methyl[3-[N-X-(2,2,6,6-tetramethyl4-piperidinyl)-oxy]propylene]silylene]];
and mixtures and combinations thereof, wherein X is Cl or Br.

2. The additive of claim 1, further comprising a source of halide atoms selected from the group consisting of sodium di-X-isocyanurate, sodium hypohalite, N-X-succinimide, and calcium hypohalite, wherein X is Cl or Br.

3. The additive of claim 1, wherein the antimicrobial polymer additive is capable of exhibiting antimicrobial activity against gram-negative bacteria, gram-positive bacteria, species that are drugs resistant and combinations thereof.

4. The additive of claim 1, wherein the antimicrobial polymer additive is mixed with a polymeric material.

5. The additive of claim 1, wherein the polymer has the form of a bead, a film, a tube, a sheet, a thread, a suture, a gauze, a bandage, an adhesive bandage, a vessel, a container, a cistern, a filter, a filament, a yarn, a fiber, a membrane, a coating, a paint or combinations thereof.

6. A method of making an antimicrobial polymer comprising the steps of:
- forming a polymer with a sterically hindered N-halo-amine selected from the group consisting of
- Poly[[6-[(1,1,3,3-tetramethylbutyl)amino]-s-triazine-2,4diyl]-N-X-[(2,2,6,6-tetramethyl-4-piperidyl)imino]-hexamethylene-[(2,2,6,6-tetramethyl-4-piperidylimino]];
- 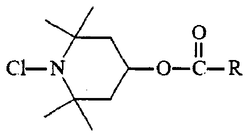 where R is C₁₁-C₂₀, preferably C₁₆-C₁₈;
- Poly[(6-morpholino-s-triazine-2,4-diyl)-N-X-[2,2,6,6-tetramethyl-4-piperidyl]imino]-hexamethylene[(2,2,6,6-tetramethyl-4-piperidyl)imino]];
- Poly[oxy[methyl[3-[N-X-(2,2,6,6-tetramethyl4-piperidinyl)-oxy]propylene]silylene]];
and mixtures and combinations thereof, wherein X is Cl or Br and
- exposing the polymer to a source of halide atoms.

7. The method of claim 6, wherein the antimicrobial polymer undergoes recharging by exposing the polymer to a source of halide atoms.

8. The method of claim 6, wherein the sterically hindered N-halo-amine halogenates with a source of halide atoms selected from the group consisting of sodium di-X-isocyanurate, sodium hypohalite, N-X-succinimide, and calcium hypohalite, wherein X is Cl or Br.

9. The method of claim 6, wherein the antimicrobial polymer additive is capable of exhibiting antimicrobial activity against gram-negative bacteria, gram-positive bacteria, species that are drugs resistant and combinations thereof.

10. A method of making an antimicrobial polymer comprising the steps of:
- mixing a sterically hindered N-halo-amine selected from the group consisting of
- Poly[[6-[(1,1,3,3-tetramethylbutyl)amino]-s-triazine-2,4-diyl]-N-X-[(2,2,6,6-tetramethyl-4-piperidyl)imino]-hexamethylene-[(2,2,6,6-tetramethyl-4-piperidylimino]]; 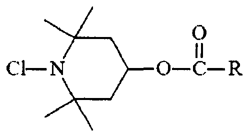 where R is C₁₁-C₂₀, preferably C₁₆-C₁₈;
- Poly[(6-morpholino-s-triazine-2,4-diyl)-N-X-[2,2,6,6-tetramethyl-4-piperidyl]imino]-hexamethylene[(2,2,6,6-tetramethyl-4-piperidyl)imino]];
- Poly[oxy[methyl[3-[N-X-(2,2,6,6-tetramethyl4-piperidinyl)-oxy]propylene]silylene]];
and mixtures and combinations thereof, wherein X is Cl or Br,
with a source of halide atoms and
- forming a polymer in the presence of the sterically hindered N-halo-amine.

11. The method of claim 10, wherein the antimicrobial polymer undergoes recharging by exposing the polymer comprising the sterically hindered N-halo-amine with a source of halide atoms.

12. The method of claim 10, further comprising that the source of halide atoms is selected from the group consisting of sodium di-X-isocyanurate, sodium hypohalite, N-X-succinimide, and calcium hypohalite, wherein X is selected from Cl or Br.

13. The method of claim 10, wherein the antimicrobial polymer additive is capable of exhibiting antimicrobial activity against gram-negative bacteria, gram-positive bacteria, species that are drugs resistant and combinations thereof.

14. A method of recharging an antimicrobial polymer comprising the step of:
- exposing a polymer comprising a sterically hindered N-halo-amine selected from the group consisting of
- Poly[[6-[(1,1,3,3-tetramethylbutyl)amino]-s-triazine-2,4-diyl]-N-X-[(2,2,6,6-tetramethyl-4-piperidyl)imino]-hexamethylene-[(2,2,6,6-tetramethyl-4-piperidylimino]];
- 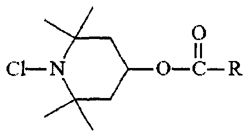 where R is C₁₁-C₂₀, preferably C₁₆-C₁₈;
- Poly[(6-morpholino-s-triazine-2,4-diyl)-N-X-[2,2,6,6-tetramethyl-4-piperidyl]imino]-hexamethylene[(2,2,6,6-tetramethyl-4-piperidyl)imino]];
- Poly[oxy[methyl[3-[N-X-(2,2,6,6-tetramethyl4-piperidinyl)-oxy]propylene]silylene]];
and mixtures and combinations thereof, wherein X is Cl or Br
to a source of halide atoms.

15. The method of claim 14, further comprising that the source of halide atoms is selected from the group consisting of sodium di-X-isocyanurate, sodium hypohalite, N-X-succinimide, and calcium hypohalite, wherein X is Cl or Br.

## Patentansprüche

1. Antimikrobielles Polymer-Additiv, umfassend ein sterisch gehindertes N-Halo-amin mit einem Molekulargewicht von mehr als 350 g/mol, wobei das sterisch gehinderte N-Halo-amin ausgewählt ist aus der Gruppe bestehend aus:
• Poly[[6-[(1,1,3,3-tetramethylbutyl)amino]-s-triazin-2,4-diyl]-N-X-[(2,2,6,6-tetramethyl-4-piperidyl)imino]-hexamethylen-[(2,2,6,6-tetramethyl-4-piperidylimino]];
• 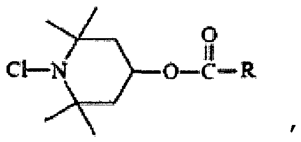 wobei R für C₁₁-C₂₀, bevorzugt für C₁₆-C₁₈ steht;
• Poly[(6-morpholino-s-triazin-2,4-diyl)-N-X-[2,2,6,6-tetramethyl-4-piperidyl]imino]-hexamethylen[(2,2,6,6-tetramethyl-4-piperidyl)imino]];
• Poly[oxy[methyl[3-[N-X-(2,2,6,6-tetramethyl-4-piperidinyl)-oxy]propyl]silylen]];
sowie Gemischen und Kombinationen aus diesen, wobei X für Cl oder Br steht.

2. Additiv nach Anspruch 1, des Weiteren umfassend eine Quelle von Halidatomen ausgewählt aus der Gruppe bestehend aus Natrium-di-X-isocyanurat, Natriumhypohalit, N-X-Succinimid und Calciumhypohalit, wobei X für Cl oder Br steht.

3. Additiv nach Anspruch 1, wobei das antimikrobielle Polymer-Additiv dazu in der Lage ist, eine antimikrobielle Aktivität gegen Gram-negative Bakterien, Gram-positive Bakterien, wirkstoffresistente Spezies sowie Kombinationen aus diesen zu zeigen.

4. Additiv nach Anspruch 1, wobei das antimikrobielle Polymer-Additiv mit einem Polymermaterial vermischt ist.

5. Additiv nach Anspruch 1, wobei das Polymer in Form eines Kügelchens, eines Films, einer Röhre, einer Folie, eines Fadens, einer Naht, einer Gaze, eines Verbands, eines selbsthaftenden Verbands, eines Gefäßes, eines Behälters, eines Tanks, eines Filters, eines Filaments, eines Garns, einer Faser, einer Membran, einer Beschichtung, einer Farbe sowie Kombinationen aus diesen vorliegt.

6. Verfahren zur Herstellung eines antimikrobiellen Polymers, umfassend die folgenden Schritte:
a) das Bilden eines Polymers mit einem sterisch gehinderten N-Halo-amin ausgewählt aus der Gruppe bestehend aus
• Poly[[6-[(1,1,3,3-tetramethylbutyl)amino]-s-triazin-2,4-diyl]-N-X-[(2,2,6,6-tetramethyl-4-piperidyl)imino]-hexamethylen-[(2,2,6,6-tetramethyl-4-piperidylimino]];
• 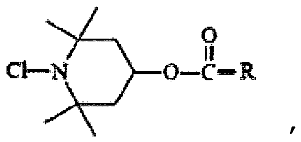 wobei R für C₁₁-C₂₀, bevorzugt für C₁₆-C₁₈ steht;
• Poly[(6-morpholino-s-triazin-2,4-diyl)-N-X-[2,2,6,6-tetramethyl-4-piperidyl]imino]-hexamethylen[(2,2,6,6-tetramethyl-4-piperidyl)imino]];
• Poly[oxy[methyl[3-[N-X-(2,2,6,6-tetramethyl-4-piperidinyl)-oxy]propyl]silylen]];
sowie Gemischen und Kombinationen aus diesen, wobei X für Cl oder Br steht; und
b) das Kontaktieren des Polymers mit einer Quelle von Halidatomen.

7. Verfahren nach Anspruch 6, wobei das antimikrobielle Polymer einem Prozess der Wiederaufladung unterzogen wird, indem das Polymer mit einer Quelle von Halidatomen in Kontakt gebracht wird.

8. Verfahren nach Anspruch 6, wobei das sterisch gehinderte N-Halo-amin mit einer Quelle von Halidatomen halogeniert, die ausgewählt ist aus der Gruppe bestehend aus Natrium-di-X-isocyanurat, Natriumhypohalit, N-X-Succinimid und Calciumhypohalit, wobei X für Cl oder Br steht.

9. Verfahren nach Anspruch 6, wobei das antimikrobielle Polymer-Additiv dazu in der Lage ist, eine antimikrobielle Aktivität gegen Gram-negative Bakterien, Gram-positive Bakterien, wirkstoffresistente Spezies sowie Kombinationen aus diesen zu zeigen.

10. Verfahren zur Herstellung eines antimikrobiellen Polymers, umfassend die folgenden Schritte:
a) das Mischen eines sterisch gehinderten N-Halo-amins ausgewählt aus der Gruppe bestehend aus
• Poly[[6-[(1,1,3,3-tetramethylbutyl)amino]-s-triazin-2,4diyl]-N-X-[(2,2,6,6-tetramethyl-4-piperidyl)imino]-hexamethylen-[(2,2,6,6-tetramethyl-4-piperidylimino]];
• 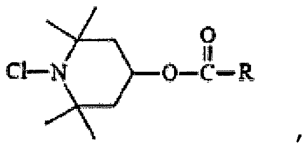 wobei R für C₁₁-C₂₀, bevorzugt für C₁₆-C₁₈ steht;
• Poly[(6-morpholino-s-triazin-2,4-diyl)-N-X-[2,2,6,6-tetramethyl-4-piperidyl]imino]-hexamethylen[(2,2,6,6-tetramethyl-4-piperidyl)imino]];
• Poly[oxy[methyl[3-[N-X-(2,2,6,6-tetramethyl-4-piperidinyl)-oxy]propyl]silylen]];
sowie Gemischen und Kombinationen aus diesen, wobei X für Cl oder Br steht;
mit einer Quelle von Halidatomen; und
b) das Bilden eines Polymers in der Gegenwart des sterisch gehinderten N-Halo-amins.

11. Verfahren nach Anspruch 10, wobei das antimikrobielle Polymer einem Prozess der Wiederaufladung unterzogen wird, indem das Polymer mit einer Quelle von Halidatomen in Kontakt gebracht wird.

12. Verfahren nach Anspruch 10, des Weiteren umfassend, dass die Quelle von Halidatomen ausgewählt ist aus der Gruppe bestehend aus Natrium-di-X-isocyanurat, Natriumhypohalit, N-X-Succinimid und Calciumhypohalit, wobei X für Cl oder Br steht.

13. Verfahren nach Anspruch 10, wobei das antimikrobielle Polymer-Additiv dazu in der Lage ist, eine antimikrobielle Aktivität gegen Gram-negative Bakterien, Gram-positive Bakterien, wirkstoffresistente Spezies sowie Kombinationen aus diesen zu zeigen.

14. Verfahren zum Wiederaufladen eines antimikrobiellen Polymers, umfassend den folgenden Schritt:
a) das Kontaktieren eines Polymers umfassend ein sterisch gehindertes N-Halo-amin ausgewählt aus der Gruppe bestehend aus
• Poly[[6-[(1,1,3,3-tetramethylbutyl)amino]-s-triazin-2,4-diyl]-N-X-[(2,2,6,6-tetramethyl-4-piperidyl)imino]-hexamethylen-[(2,2,6,6-tetramethyl-4-piperidylimino]];
• 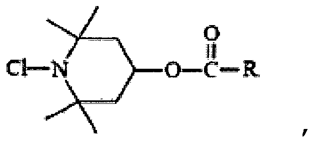 wobei R für C₁₁-C₂₀, bevorzugt für C₁₆-C₁₈ steht;
• Poly[(6-morpholino-s-triazin-2,4-diyl)-N-X-[2,2,6,6-tetramethyl-4-piperidyl]imino]-hexamethylen[(2,2,6,6-tetramethyl-4-piperidyl)imino]];
• Poly[oxy[methyl[3-[N-X-(2,2,6,6-tetramethyl-4-piperidinyl)-oxy]propyl]silylen]];
sowie Gemischen und Kombinationen aus diesen, wobei X für Cl oder Br steht;
mit einer Quelle von Halidatomen.

15. Verfahren nach Anspruch 14, des Weiteren umfassend, dass die Quelle von Halidatomen ausgewählt ist aus der Gruppe bestehend aus Natrium-di-X-isocyanurat, Natriumhypohalit, N-X-Succinimid und Calciumhypohalit, wobei X für Cl oder Br steht.

## Revendications

1. Additif polymère antimicrobien comprenant une N-halogéno-amine à encombrement stérique présentant une masse moléculaire supérieure à 350 g/mol, dans lequel la N-halogéno-amine à encombrement stérique est choisie 5 dans le groupe constitué de :
- poly[[6-[(1,1,3,3-tétraméthylbutyl)amino]-s-triazine-2,4-diyl]-N-X-[(2,2,6,6-tétraméthyl-4-pipéridyl)imino]-hexaméthylène-[(2,2,6,6-tétraméthyl-4-pipéridylimino]] ;
- 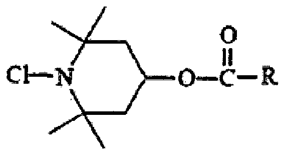 où R est en C₁₁ à C₂₀, de préférence en C₁₆ à C₁₈ ;
- poly[(6-morpholino-s-triazine-2,4-diyl)-N-X-[2,2,6,6-tétraméthyl-4-pipéridyl]imino]-hexaméthylène[(2,2,6,6-tétraméthyl-4-pipéridyl)imino]] ;
- poly[oxy[méthyl[3-[N-X-(2,2,6,6-tétraméthyl-4-pipéridinyl)-oxy]propylène]silylène]] ;
et des mélanges et des combinaisons de ceux-ci, où X représente Cl ou Br.

2. Additif selon la revendication 1, comprenant en outre une source d'atomes d'halogénures choisie dans le groupe constitué de di-X-isocyanurate de sodium, hypohalogénite de sodium, N-X-succinimide, et hypohalogénite de calcium, dans lequel X représente Cl ou Br.

3. Additif selon la revendication 1, dans lequel l'additif polymère antimicrobien est capable d'afficher une activité antimicrobienne contre des bactéries Gram négatif, des bactéries Gram positif, des espèces qui sont pharmacorésistantes et des combinaisons de celles-ci.

4. Additif selon la revendication 1, dans lequel l'additif polymère antimicrobien est mélangé avec un matériau polymère.

5. Additif selon la revendication 1, dans lequel le polymère a la forme d'une bille, d'un film, d'un tube, d'une feuille, d'un fil, d'une suture, d'une gaze, d'un bandage, d'un bandage adhésif, d'un récipient, d'un conteneur, d'une citerne, d'un filtre, d'un filament, d'un filé, d'une fibre, d'une membrane, d'un enrobage, d'une peinture ou de combinaisons de ceux-ci.

6. Procédé de fabrication d'un polymère antimicrobien comprenant les étapes suivantes :
la formation d'un polymère avec une N-halogéno-amine à encombrement stérique choisie dans le groupe constitué de :
- poly[[6-[(1,1,3,3-tétraméthylbutyl)amino]-s-triazine-2,4-diyl]-N-X-[(2,2,6,6-tétraméthyl-4-pipéridyl)imino]-hexaméthylène-[(2,2,6,6-tétraméthyl-4-pipéridylimino]] ;
- 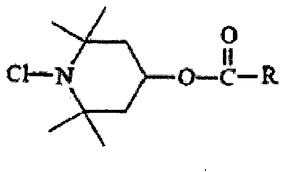 où R est en C₁₁ à C₂₀, de préférence en C₁₆ à C₁₈ ;
- poly[(6-morpholino-s-triazine-2,4-diyl)-N-X-[2,2,6,6-tétraméthyl-4-pipéridyl]imino]-hexaméthylène[(2,2,6,6-tétraméthyl-4-pipéridyl)imino]] ;
- poly[oxy[méthyl[3-[N-X-(2,2,6,6-tétraméthyl-4-pipéridinyl)-oxy]propylène]silylène]] ;
et des mélanges et des combinaisons de ceux-ci, où X représente Cl ou Br et
- l'exposition du polymère à une source d'atomes d'halogénures.

7. Procédé selon la revendication 6, dans lequel le polymère antimicrobien subit un rechargement par exposition du polymère à une source d'atomes d'halogénures.

8. Procédé selon la revendication 6, dans lequel la N-halogéno-amine à encombrement stérique est halogénée avec une source d'atomes d'halogénures choisie dans le groupe constitué de di-X-isocyanurate de sodium, hypohalogénite de sodium, N-X-succinimide, et hypohalogénite de calcium, dans lequel X représente Cl ou Br.

9. Procédé selon la revendication 6, dans lequel l'additif polymère antimicrobien est capable d'afficher une activité antimicrobienne contre des bactéries Gram négatif, des bactéries Gram positif, des espèces qui sont pharmacorésistantes et des combinaisons de celles-ci.

10. Procédé de fabrication d'un polymère antimicrobien comprenant les étapes suivantes :
- le mélange d'une N-halogéno-amine à encombrement stérique choisie dans le groupe constitué de
- poly[[6-[(1,1,3,3-tétraméthylbutyl)amino]-s-triazine-2,4-diyl]-N-X-[(2,2,6,6-tétraméthyl-4-pipéridyl)imino]-hexaméthylène-[(2,2,6,6-tétraméthyl-4-pipéridylimino]] ; 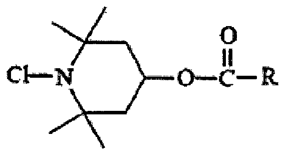 où R est en C₁₁ à C₂₀, de préférence en C₁₆ à C₁₈ ;
- poly[(6-morpholino-s-triazine-2,4-diyl)-N-X-[2,2,6,6-tétraméthyl-4-pipéridyl]imino]-hexaméthylène[(2,2,6,6-tétraméthyl-4-pipéridyl)imino]] ;
- poly[oxy[méthyl[3-[N-X-(2,2,6,6-tétraméthyl-4-pipéridinyl)-oxy]propylène]silylène]] ;
et des mélanges et des combinaisons de ceux-ci, où X représente Cl ou Br,
avec une source d'atomes d'halogénures et
- la formation d'un polymère en présence de la N-halogéno-amine à encombrement stérique.

11. Procédé selon la revendication 10, dans lequel le polymère antimicrobien subit un rechargement par exposition du polymère comprenant une N-halogéno-amine à encombrement stérique avec une source d'atomes d'halogénures.

12. Procédé selon la revendication 10, comprenant en outre le fait que la source d'atomes d'halogénures soit choisie dans le groupe constitué de di-X-isocyanurate de sodium, hypohalogénite de sodium, N-X-succinimide, et hypohalogénite de calcium, dans lequel X représente Cl ou Br.

13. Procédé selon la revendication 10, dans lequel l'additif polymère antimicrobien est capable d'afficher une activité antimicrobienne contre des bactéries Gram négatif, des bactéries Gram positif, des espèces qui sont pharmacorésistantes et des combinaisons de celles-ci .

14. Procédé de rechargement d'un polymère antimicrobien comprenant l'étape suivante :
- l'exposition d'un polymère comprenant une N-halogéno-amine à encombrement stérique choisie dans le groupe constitué de :
- poly[[6-[(1,1,3,3-tétraméthylbutyl)amino]-s-triazine-2,4-diyl]-N-X-[(2,2,6,6-tétraméthyl-4-pipéridyl)imino]-hexaméthylène-[(2,2,6,6-tétraméthyl-4-pipéridylimino]] ; 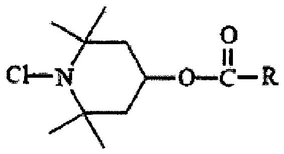 où R est en C₁₁ à C₂₀, de préférence en C₁₆ à C₁₈ ;
- poly[(6-morpholino-s-triazine-2,4-diyl)-N-X-[2,2,6,6-tétraméthyl-4-pipéridyl]imino]-hexaméthylène[(2,2,6,6-tétraméthyl-4-pipéridyl)imino]] ;
- poly[oxy[méthyl[3-[N-X-(2,2,6,6-tétraméthyl-4-pipéridinyl)-oxy]propylène]silylène]] ;
et des mélanges et des combinaisons de ceux-ci, où X représente Cl ou Br,
à une source d'atomes d'halogénures.

15. Procédé selon la revendication 14, comprenant en outre que la source d'atomes d'halogénures est choisie dans le groupe constitué de di-X-isocyanurate de sodium, hypohalogénite de sodium, N-X-succinimide, et hypohalogénite de calcium, dans lequel X représente Cl ou Br.
